# EUROPÄISCHE PATENTSCHRIFT

(11) **EP 3 753 753 B1**
(45) Veröffentlichungstag und Bekanntmachung des Hinweises auf die Patenterteilung: **05.01.2022**
(21) Anmeldenummer: 20173080.1
(22) Anmeldetag: 06.05.2020
(51) Int. Cl.: B60C 11/03, B60C 11/12

(54) **FAHRZEUGLUFTREIFEN**
PNEUMATIC TYRE
PNEUMATIQUE DE VÉHICULE

(30) Priorität: 17.06.2019 DE 102019208751
(43) Veröffentlichungstag der Anmeldung: 23.12.2020
(73) Patentinhaber: Continental Reifen Deutschland GmbH, 30165 Hannover (DE)
(72) Erfinder: Kristen, Florian, 30419 Hannover (DE); Lutz, André, 30419 Hannover (DE)
(74) Vertreter: Continental Corporation

(56) Entgegenhaltungen:
- EP-A1- 2 186 654
- EP-A1- 2 990 235
- EP-A1- 3 088 212
- DE-B4-112006 001 381
- JP-A- 2006 151 223
- JP-A- 2006 151 229
- JP-A- 2007 069 702
- JP-A- 2009 298 267
- JP-A- 2010 137 662
- JP-A- 2017 210 168
- JP-A- 2017 210 170

## Beschreibung

Die Erfindung betrifft einen Fahrzeugluftreifen mit einem profilierten Laufstreifen mit Profilpositiven, beispielsweise Profilrippen oder Profilblöcken, welche an ihrer Außenfläche mit einer Einschnittschraffur aus einem oder mehreren streifenförmigen Einschnittfeld(ern) versehen sind und von Einschnittfeldern freie Bereiche aufweisen, wobei jedes Einschnittfeld an der Außenfläche des zugehörigen Profilpositivs eine rahmenartige Feldbegrenzung aufweist und aus einer Vielzahl von gerade und zumindest in Gruppen parallel zueinander verlaufenden, abwechselnd aufeinanderfolgenden Einschnitten und Stegen gebildet ist, wobei die Einschnitte und die Stege jeweils eine Breite von 0,4 mm bis 1,5 mm und die Einschnitte eine Tiefe von 1,0 mm bis 3,0 mm aufweisen.

Ein derartiger Fahrzeugluftreifen, welcher insbesondere ein Nutzfahrzeugreifen ist, ist beispielsweise aus der EP 2 990 235 A1 bekannt. Der Laufstreifen weist eine zentrale Profilrippe und zwei an diese anschließende mittlere Profilrippen auf, wobei die Profilrippen voneinander durch Umfangsrillen getrennt sind. Die Profilrippen sind mit einer Einschnittschraffur aus mehreren Einschnittfeldern versehen, welche sich jeweils zwischen zwei Umfangsrillen erstrecken und zumindest abschnittsweise eine Breite von zumindest 5,0 mm aufweisen. Die auf den mittleren Profilrippen ausgebildeten Einschnittfelder ragen laufstreifeninnenseitig auf einem Vorsprung in die jeweilige Umfangsrille hinein. Innerhalb jedes Einschnittfeldes verlaufen die Einschnitte und Stege gerade und parallel zueinander sowie unter einem Winkel von 25° bis 55° zur Umfangsrichtung. Derart gestaltete Einschnittfelder sollen eine verbesserte Traktions- und Nässeperformance bewirken. Die Wirkung der Einschnittkanten bzw. Stege ist infolge der einfachen Gestaltung der Einschnittfelder begrenzt.

Die EP 2 186 654 A1 offenbart einen Fahrzeugluftreifen mit einem Laufstreifen mit Profilblöcken, welche mit einer Vielzahl von Einschnitten mit einer Tiefe von 0,05 mm bis 1,0 mm und einer Breite von 0,1 mm bis 0,8 mm versehen sind, wobei sich zwischen den Einschnitten Stege befinden und benachbarte Einschnitte bezogen auf ihre Mittellinien Abstände von 0,5 mm bis 2,0 mm voneinander aufweisen. Die von den Einschnitten gebildeten Einschnittfelder überziehen die Außenfläche des jeweiligen Profilblockes und setzen sich - betrachtet in axialer Richtung - jeweils aus zwei seitlichen Feldabschnitten und einem zentralen Feldabschnitt zusammen. Die Einschnitte in den seitlichen Feldabschnitten verlaufen zur Umfangsrichtung unter einem größeren Winkel als die Einschnitte im zentralen Feldabschnitt. Die getroffenen Maßnahmen sollen zu einer Verbesserung des Eisperformance beitragen.

Aus der JP 2006 151 229 A ist ein Fahrzeugluftreifen mit einem Laufstreifen mit einer zentralen Profilrippe und mit Profilblöcken bekannt, wobei die Profilrippe und die Profilblöcke jeweils von einem Einschnittfeld überzogen sind. Die zentrale Profilrippe und die Profilblöcke sind ferner jeweils mit in Draufsicht parallel zueinander verlaufenden, weiteren Einschnitten versehen, welche die Einschnitte der Einschnittfelder kreuzen. Der Reifen soll im Neuzustand bzw. bei wenig abgeriebenem Laufstreifen gute Griffeigenschaften aufweisen.

Die JP 2006 151 223 A1 offenbart einen Fahrzeugluftreifen mit einem Laufstreifen mit schulterseitigen und mittleren Profilblöcken, welche jeweils durch zumindest einen sich in axialer Richtung erstreckenden Einschnitt in Blocksegmente gegliedert sind. Die Profilblöcke sind ferner jeweils mit zwei in Draufsicht gebogen verlaufenden Einschnitten versehen, welche einander kreuzen und welche seichter ausgeführt sind als der erstgenannte Einschnitt. Die getroffenen Maßnahmen sollen die Griffeigenschaften bei neuem bzw. wenig abgefahrenem Reifen verbessern.

Die JP 2010 137 662 A offenbart einen Fahrzeugluftreifen mit einem Laufstreifen mit Profilblöcken, in welchen V-förmig zueinander orientierte Einschnitte ausgebildet sind, wobei die V-Spitzen in Richtung zur Blockmitte zeigen und die Einschnitte unter einem Winkel von 45° ± 15° zur Umfangsrichtung verlaufen.

Der Erfindung liegt die Aufgabe zugrunde, bei einem Reifen eingangs genannten Art Einschnittfelder derart zu gestalten, dass ihre Wirkung hinsichtlich Nässe- und Traktionsperformance deutlich verbessert ist.

Gelöst wird die gestellte Aufgabe erfindungsgemäß dadurch, dass sich jedes Einschnittfeld aus zumindest zwei aneinander angrenzend ausgebildeten Gruppen von jeweils parallel zueinander verlaufenden Einschnitten zusammensetzt, wobei die zu einer Gruppe gehörenden Einschnitte zu den Einschnitten in der bzw. den weiteren Gruppe(n) unter einem Winkel verlaufen, wobei Einschnitte aus zumindest zwei Gruppen in Draufsicht V-förmig zueinander verlaufen und die V-Spitzen auf einer einzigen gebogen oder gerade verlaufenden Erstreckungslinie liegen und wobei das bzw. die Einschnittfeld(er) - senkrecht zur Erstreckungslinie ermittelt - über zumindest 75% der Länge der Erstreckungslinie eine Breite von 5,0 mm bis 15,0 mm aufweist bzw. aufweisen.

Bei einem erfindungsgemäßen Reifen ist somit eine "multidirektionale" Griffstruktur an der Außenfläche des Laufstreifens ausgebildet. Diese stellt unterschiedlich orientierte Griffkanten an der Laufstreifenperipherie zur Verfügung, sodass die Nassgriffeigenschaften - im Gegensatz zu den bisher bekannten "unidirektionalen" Griffstrukturen - weitgehend unabhängig von der jeweiligen Belastungsrichtung verbessert sind.

Da die V-Spitzen auf einer gebogen oder gerade verlaufenden Erstreckungslinie liegen, handelt es sich um eine einfache, optisch ansprechende Ausgestaltung mit besonders effektiv verlaufenden Traktionskanten, die den Nassgriff verbessern.

Es wird eine besonders ausgewogene Nässe- und Traktionsperformance erreicht, da das Einschnittfeld bzw. die Einschnittfelder - senkrecht zur Erstreckungslinie ermittelt - über zumindest 75% der Länge der Erstreckungslinie eine Breite von 5,0 mm bis 15,0 mm aufweist bzw. aufweisen.

Bei einer bevorzugten Ausführung schließen die Einschnitte, welche V-förmig zueinander verlaufen, miteinander einen Winkel von 60° bis 120°, insbesondere von 80° bis 115°, besonders bevorzugt von 100° bis 110°, ein. Derart zueinander gewinkelt verlaufende Einschnitte tragen zu einer Verbesserung der erwähnten "multidirektionalen" Griffwirkung bei.

Gemäß einer bevorzugten Variante treffen an jeder V-Spitze zwei Einschnitte bzw. zwei Stege aufeinander. Gemäß einer alternativen bevorzugten Variante treffen an jeder V-Spitze ein Einschnitt und ein Steg aufeinander.

Weitere bevorzugte Ausgestaltungen der Einschnittfelder betreffen deren weitere Orientierung am Laufstreifen, welche auf unterschiedliche Weise, gewählt werden kann, um die Anordnung und Ausgestaltung der Einschnittfelder auf besonders vorteilhafte Weise an die sonstige Ausführung des Profils des Laufstreifens anzupassen. Gemäß einer bevorzugten Variante ist zumindest ein Einschnittfeld mit einer in Umfangsrichtung verlaufenden Erstreckungslinie vorgesehen. Bei einem Laufstreifen mit zumindest einer in Umfangsrichtung umlaufenden Profilrippe, ist gemäß einer weiteren bevorzugten Ausführung auf der Profilrippe zumindest ein in Umfangsrichtung umlaufendes Einschnittfeld mit einer in Umfangsrichtung ausgerichteten Erstreckungslinie ausgebildet. Darüber hinaus ist es bevorzugt, wenn Einschnittfelder mit in axialer Richtung verlaufenden Erstreckungslinien und/oder Einschnittfelder mit zur axialen Richtung unter einem Winkel von bis zu 60°, insbesondere von 10° bis 45°, besonders bevorzugt von 15° bis 35°, verlaufenden Erstreckungslinien vorgesehen sind.

Bei einer weiteren bevorzugten Variante, durchqueren die Einschnittfelder die Profilpositive. Solche Einschnittfelder sind vor allem bei lateraler Beanspruchung für das Nassgriffverhalten besonders vorteilhaft.

Für einen gleichmäßigen Abrieb kann es von Vorteil sein, wenn Einschnittfelder vor Randkanten des jeweiligen Profilpositives in einem Abstand von mindestens 5,0 mm enden.

Eine weitere bevorzugte Variante ist dadurch gekennzeichnet, dass die Breite des Einschnittfeldes bzw. der Einschnittfelder über den Verlauf der Erstreckungslinie konstant ist oder insbesondere kontinuierlich abnimmt.

Für eine ausgewogene Nässe- und Traktionsperformance ist es ferner vorteilhaft, wenn der Reifen einen Laufstreifen mit zueinander benachbart verlaufenden Profipositiven, wie Profilrippen oder Profilblockreihen, welche durch eine Umfangsrille voneinander getrennt sind, aufweist, wobei die in dem einen Profilpositiv ausgebildeten Einschnittfelder gegenüber den im benachbarten Profilpositiv ausgebildeten Einschnittfeldern - jeweils bezogen auf die Erstreckungslinien der Einschnittfelder - in Umfangsrichtung gegeneinander versetzt sind.

Außerdem ist die Nässe- und Traktionsperformance des Reifens auch dann besonders ausgewogen, wenn der Reifen einen Laufstreifen mit zumindest einer Profilblockreihe mit in Umfangsrichtung aufeinanderfolgenden Profilblöcken aufweist, wobei auf jedem Profilblock oder auf jedem zweiten Profilblock jeweils ein Einschnittfeld ausgebildet ist.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 eine Draufsicht auf einen Umfangsabschnitt eines Laufstreifens eines Fahrzeugluftreifens mit einer ersten Ausführungsvariante der Erfindung und
Fig. 2 bis Fig. 6 je eine Draufsicht auf einen Laufstreifen mit einer weiteren Ausführungsvariante der Erfindung.

Gemäß der Erfindung ausgeführte Fahrzeugluftreifen sind Reifen eines beliebigen Typs, insbesondere Reifen in Radialbauart für Personenkraftwagen, Vans, Light-Trucks oder Nutzfahrzeuge.

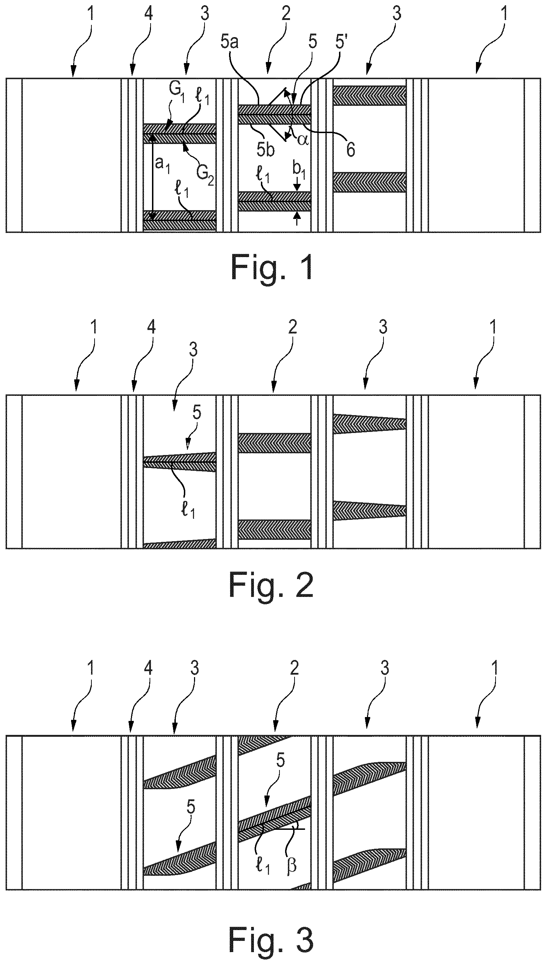

Fig. 1 bis Fig. 6 zeigen jeweils eine vereinfachte Draufsicht auf einen Umfangsabschnitt eines Laufstreifens eines Fahrzeugluftreifens. Der Laufstreifen weist zwei schulterseitige Profilrippen 1, eine im Bereich des Reifenzenits verlaufende zentrale Profilrippe 2 und zwei mittlere Profilrippen 3, welche sich jeweils zwischen der zentralen Profilrippe 2 und der jeweiligen schulterseitigen Profilrippe 1 befinden, auf. Die Profilrippen 1, 2, 3 sind durch in den Ausführungsbeispielen in Draufsicht gerade verlaufende Umfangsrillen 4 getrennt, wobei die Profilrippen 1, 2, 3 nur schematisch dargestellt sind und mit insbesondere in an sich bekannter Weise ausgeführten Rillen, beispielsweise Querrillen, und dergleichen strukturiert sein können. Die zentrale Profilrippe 2 und die mittleren Profilrippen 3 sind mit einer Einschnittschraffur versehen, welche innerhalb jeder Profilrippe 2, 3 ein einziges oder mehrere streifenförmige Einschnittfeld(er) 5 aufweist.

Die Einschnittfelder 5 weisen jeweils eine Gruppe G1 von parallelen, gerade verlaufenden Einschnitten 5a und eine Gruppe G2 von ebenfalls parallelen, gerade verlaufenden Einschnitten 5b auf (Fig. 1), wobei die Einschnitte 5a, 5b in Draufsicht V-förmig zueinander verlaufen. Die Einschnitte 5a schließen mit den Einschnitten 5b einen Winkel α (Fig. 1) von 60° bis 120°, insbesondere von 80° bis 115°, und besonders bevorzugt von 100° bis 110°, ein. Zwischen den Einschnitten 5a, 5b sind Stege 6 (Fig. 1) ausgebildet, welche entweder bis auf das Niveau der Außenfläche der Profilrippe 2, 3 reichen oder gegenüber diesem in radialer Richtung um insbesondere 0,1 mm bis 0,3 mm abgesenkt sind. Die Einschnitte 5a, 5b weisen gegenüber dem Niveau der Laufstreifenperipherie in radialer Richtung eine Tiefe von 1,0 mm bis 3,0 mm auf. Ferner weisen die Einschnitte 5a, 5b und die Stege 6 jeweils eine Breite von 0,4 mm bis 1,5 mm, insbesondere von bis zu 0,8 mm, auf, wobei die Breite sämtlicher vorgesehener Einschnitte 5a, 5b und Stege 6 vorzugsweise übereinstimmt, wie auch in Fig. 1 bis Fig. 6 gezeigt. Die Einschnittfelder 5 weisen an der Außenfläche der Profilrippen 2, 3 jeweils eine rahmenartige Feldbegrenzung 5' auf (Fig. 1), welche von Rillenkanten der jeweiligen Umfangsrillen 4 mitgebildet sein kann (Fig. 1 bis Fig. 5).

Innerhalb eines Einschnittfeldes 5 liegen die V-Spitzen der V-förmig zueinander verlaufenden Einschnitte 5a, 5b auf einer Erstreckungslinie l₁, welche bei den gezeigten Ausführungsbeispielen in Draufsicht gerade verläuft. Die Einschnittfelder 5 weisen - ermittelt senkreckt zu ihrer Erstreckungslinie l₁ - über zumindest 75% der Länge der Erstreckungslinie l₁ eine sich gegebenenfalls kontinuierlich verändernde Breite b₁ (Fig. 1) von 5,0 mm bis 15,0 mm auf. An der jeweils breitesten Stelle eines Einschnittfeldes 5 beträgt die Breite b₁ vorzugsweise 10,0 mm bis 15,0 mm.

Bei den in Fig. 1 bis Fig. 5 gezeigten Varianten durchqueren die Einschnittfelder 5 die Profilrippen 2, 3, verlaufen daher bis zu den die jeweilige Profilrippe 2, 3 begrenzenden Umfangsrillen 4. Innerhalb einer Profilrippe 2, 3 befindliche Einschnittfelder 5 weisen - ermittelt zwischen ihren Erstreckungslinien l₁ - in Umfangsrichtung einen gegenseitigen Abstand a₁ (Fig. 1) von 30,0 mm bis 80,0 mm, insbesondere von 40,0 mm bis 60,0 mm, auf.

Bei der Variante in Fig. 1 sind die Einschnittfelder 5 in Draufsicht rechteckig und verlaufen - bezogen auf die Erstreckungslinien l₁ - in axialer Richtung, wobei die in den beiden mittleren Profilrippen 3 ausgebildeten Einschnittfelder 5 zu den in der zentralen Profilrippe 2 ausgebildeten Einschnittfeldern 5 in entgegengesetzte Umfangsrichtungen versetzt sind. An den Enden der Einschnittfelder 5 sind die Einschnitte 5a, 5b entsprechend kürzer ausgeführt, wobei an dem einen Ende keine V-Spitzen mehr vorhanden sind, da die Einschnitte 5a, 5b bis zur jeweiligen Umfangsrille 4 verlaufen.

Die Variante in Fig. 2 unterscheidet sich von jener gemäß Fig. 1 dadurch, dass die Einschnittfelder 5 in den mittleren Profilrippen 3 zur Laufstreifenaußenseite kontinuierlicher schmäler werden.

Bei der in Fig. 3 gezeigten Variante verlaufen die Einschnittfelder 5 - in Draufsicht betrachtet und bezogen auf die Erstreckungslinien l₁ - unter einem Winkel β von etwa 20° und innerhalb jeder Profilrippe 2, 3 parallel zueinander, wobei die relative Orientierung sämtlicher Erstreckungslinien l₁ zur Umfangsrichtung übereinstimmt. Die Einschnittfelder 5 in der zentralen Profilrippe 2 sind in Draufsicht parallelogrammförmig, die Einschnittfelder 5 in den mittleren Profilrippen 3 weisen laufstreifenaußenseitig einen Endabschnitt auf, in welchem die aufeinanderfolgenden Einschnitte 5a - von Einschnitt 5a zu Einschnitt 5a - stufenweise bis zur entsprechenden Umfangsrille 4 kürzer werden.

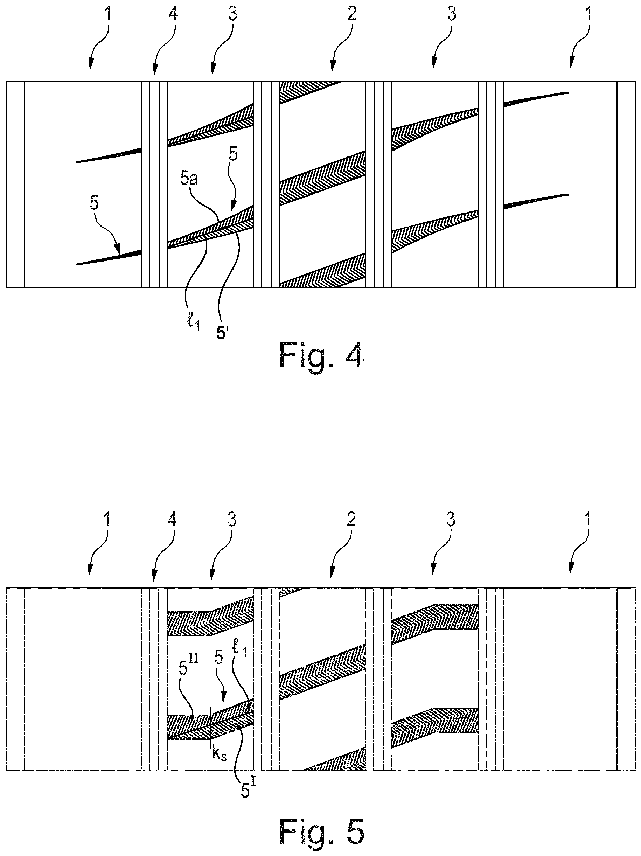

Die in Fig. 4 gezeigte Variante unterscheidet sich von jener gemäß Fig. 3 dadurch, dass die Einschnittfelder 5 in den mittleren Profilrippen 3 - jeweils betrachtet über den Verlauf ihrer Erstreckungslinien l₁ - eine in Richtung zur jeweiligen schulterseitigen Umfangsrille 4 kontinuierlich abnehmende Breite und einen leicht gebogenen Feldbegrenzung 5' aufweisen. In diesen Einschnittfeldern 5 werden die aufeinanderfolgenden Einschnitte 5a - von Einschnitt 5a zu Einschnitt 5a - stufenweise in Richtung Laufstreifenaußenseite kürzer. Darüber hinaus sind in den schulterseitigen Profilrippen 1 zur Laufstreifenaußenseite spitz zusammenlaufende Einschnittfelder 5 ausgebildet, deren Einschnitte 5a, 5b kaum mehr erkennbar sind und welche - bezogen auf ihre nicht gezeigten Erstreckungslinien l₁ - im Wesentlichen in Fortsetzung der Erstreckungslinien l₁ der in der jeweiligen mittleren Profilrippe 3 ausgebildeten Einschnittfelder 5 verlaufen.

Die in Fig. 5 gezeigte Variante unterscheidet sich von jener gemäß Fig. 3 dadurch, dass die Einschnittfelder 5 in den mittleren Profilrippen 3 jeweils ein Knickstelle aufweisen und sich aus einem in Draufsicht parallelogrammförmigen Feldabschnitt 5^{I} und einem in Draufsicht rechteckigen Feldabschnitt 5^{II} zusammensetzen, wobei eine durch die Knickstelle verlaufende Linie k_{S} in Umfangsrichtung ausgerichtet ist. Der parallelogrammförmige Feldabschnitt 5^{I} erstreckt sich in Richtung der Erstreckungslinie l₁, der rechteckige Feldabschnitt 5^{II} erstreckt sich in axialer Richtung.

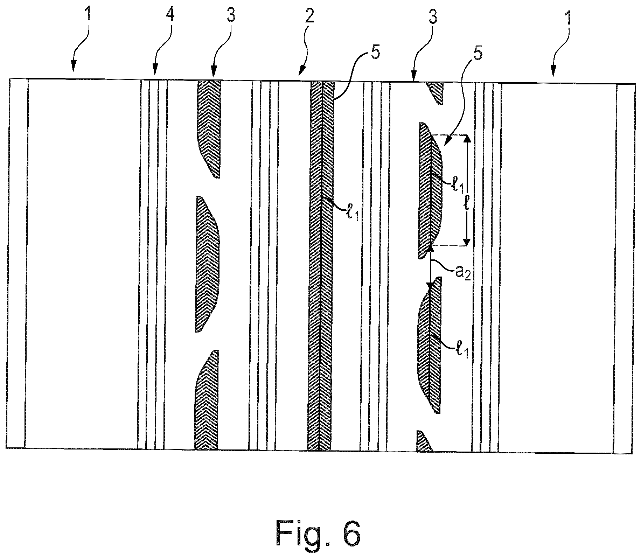

Bei der in Fig. 6 gezeigten Variante ist in der zentralen Profilrippe 2 ein einziges bandförmiges Einschnittfeld 5 ausgebildet, welches eine konstante Breite aufweist, in Umfangsrichtung umläuft, wobei die Erstreckungslinie l₁ im Reifenzenit verläuft. In jeder mittleren Profilrippe 3 sind streifenförmige Einschnittfelder 5 ausgebildet, welche an ihren in den Umfangsrichtungen liegenden Enden an derselben Seite auslaufen und deren Erstreckungslinien l₁ in Umfangsrichtung orientiert sind. In Umfangsrichtung unmittelbar aufeinanderfolgende Einschnittfelder 5 sind um 180° zueinander verdreht orientiert und weisen - ermittelt entlang ihrer Erstreckungslinien l₁ - eine Länge 1 von 30,0 mm bis 100,0 mm und einen gegenseitigen Abstand a₂ von 10,0 mm bis 30,0 mm auf.

Die V-Spitzen von zu unterschiedlichen Einschnittfeldern 5 gehörenden Einschnitten 5a, 5b können eine übereinstimmende Orientierung aufweisen, wie beispielsweise auch in Fig. 1, Fig. 2, Fig. 4 oder Fig. 6 gezeigt. Alternativ können die V-Spitzen der Einschnitte 5a, 5b, die zu unterschiedlichen Einschnittfeldern 5 gehören, beispielsweise auch in entgegengesetzten Richtungen orientiert sein (Fig. 3, Fig. 5).

Die Erfindung ist auf die beschriebenen Ausführungsvarianten nicht beschränkt.

Insbesondere können die Einschnitte bzw. die Einschnittfelder eine von der beschriebenen V-förmigen Gestalt abweichende Gestalt aufweisen. Die Einschnittfelder können bezogen auf ihre Erstreckungslinien l₁ auch gebogen verlaufen, sodass sich der Winkel, unter welchen die Erstreckungslinien l₁ verlaufen, um insbesondere bis zu 10° kontinuierlich ändert. Der Winkel ist dabei jeweils relativ zu einer an die gebogen verlaufende Erstreckungslinie l₁ angelegten Tangente ermittelt. Erfindungsgemäße Einschnittfelder können auch auf Profilblöcken ausgebildet sein, wobei sich vorzugsweise auf jedem oder in Umfangsrichtung auf jedem zweiten Profilblock ein Einschnittfeld 5 befindet.

Es ist bevorzugt, wenn die Einschnittfelder 5 innerhalb der Bodenaufstandsfläche ausgebildet sind, wobei die Bodenaufstandsfläche dem statisch ermittelten Footprint entspricht (ermittelt mit einem auf einer Normfelge montierten Reifen, Last bei 70 % der maximalen Tragfähigkeit, Innendruck 85 % des Normdruckes, gemäß ETRTO-Standards). Ferner können die Einschnittfelder 5 zu den an den jeweiligen Rillen liegenden Profilpositivkanten einen Abstand von mindestens 5,0 mm aufweisen.

### Bezugsziffernliste

- 1: schulterseitige Profilrippe
- 2: zentrale Profilrippe
- 3: mittlere Profilrippe
- 4: Umfangsrille
- 5: Einschnittfeld
- 5': Feldbegrenzung
- 5^{I}: Feldabschnitt
- 5^{II}: Feldabschnitt
- 5a, 5b: Einschnitt
- 6: Steg
- α, β: Winkel
- a₁, a₂: Abstand
- b₁: Breite
- G₁, G₂: Gruppe
- kₛ: Linie
- l₁: Erstreckungslinie
- 1: Länge

## Patentansprüche

1. Fahrzeugluftreifen mit einem profilierten Laufstreifen mit Profilpositiven, beispielsweise Profilrippen (1, 2, 3) oder Profilblöcken, welche an ihrer Außenfläche mit einer Einschnittschraffur aus einem oder mehreren streifenförmigen Einschnittfeld(ern) (5) versehen sind und von Einschnittfeldern (5) freie Bereiche aufweisen, wobei jedes Einschnittfeld (5) an der Außenfläche des zugehörigen Profilpositivs eine rahmenartige Feldbegrenzung (5') aufweist und aus einer Vielzahl von gerade und zumindest in Gruppen (G1, G2) parallel zueinander verlaufenden, abwechselnd aufeinanderfolgenden Einschnitten (5a, 5b) und Stegen (6) gebildet ist, wobei die Einschnitte (5a, 5b) und die Stege (6) jeweils eine Breite von 0,4 mm bis 1,5 mm und die Einschnitte (5a, 5b) eine Tiefe von 1,0 mm bis 3,0 mm aufweisen,
**dadurch gekennzeichnet,**
**dass** sich jedes Einschnittfeld (5) aus zumindest zwei aneinander angrenzend ausgebildeten Gruppen (G1, G2) von jeweils parallel zueinander verlaufenden Einschnitten (5a, 5b) zusammensetzt, wobei die zu einer Gruppe (G1) gehörenden Einschnitte (5a) zu den Einschnitten (5b) in der bzw. den weiteren Gruppe(n) (G2) unter einem Winkel (α) verlaufen,
wobei Einschnitte (5a, 5b) aus zumindest zwei Gruppen (G1, G2) in Draufsicht V-förmig zueinander verlaufen und die V-Spitzen auf einer einzigen gebogen oder gerade verlaufenden Erstreckungslinie (l₁) liegen und
wobei das bzw. die Einschnittfeld(er) (5) - senkrecht zur Erstreckungslinie (l₁) ermittelt - über zumindest 75% der Länge der Erstreckungslinie (l₁) eine Breite (b₁) von 5,0 mm bis 15,0 mm aufweist bzw. aufweisen.

2. Fahrzeugluftreifen nach Anspruch 1, **dadurch gekennzeichnet, dass** die Einschnitte (5a, 5b), welche V-förmig zueinander verlaufen, miteinander einen Winkel (α) von 60° bis 120°, insbesondere von 80° bis 115°, besonders bevorzugt von 100° bis 110°, einschließen.

3. Fahrzeugluftreifen nach Anspruch 1 oder 2, **dadurch gekennzeichnet, dass** an jeder V-Spitze zwei Einschnitte (5a, 5b) bzw. zwei Stege (6) aufeinandertreffen.

4. Fahrzeugluftreifen nach Anspruch 1 oder 2, **dadurch gekennzeichnet, dass** an jeder V-Spitze ein Einschnitt (5a, 5b) und ein Steg (6) aufeinandertreffen.

5. Fahrzeugluftreifen nach einem der Ansprüche 1 bis 4, **dadurch gekennzeichnet, dass** zumindest ein Einschnittfeld (5) mit einer in Umfangsrichtung verlaufenden Erstreckungslinie (l₁) vorgesehen ist.

6. Fahrzeugluftreifen nach einem der Ansprüche 1 bis 5, **dadurch gekennzeichnet, dass** zu den Profilpositiven des Laufstreifens zumindest eine in Umfangsrichtung umlaufende Profilrippe (2) gehört, auf welcher zumindest ein in Umfangsrichtung umlaufendes Einschnittfeld (5) mit einer in Umfangsrichtung ausgerichteten Erstreckungslinie (l₁) ausgebildet ist.

7. Fahrzeugluftreifen nach einem der Ansprüche 1 bis 6, **dadurch gekennzeichnet, dass** Einschnittfelder (5) mit in axialer Richtung verlaufenden Erstreckungslinien (l₁) vorgesehen sind.

8. Fahrzeugluftreifen nach einem der Ansprüche 1 bis 6, **dadurch gekennzeichnet, dass** Einschnittfelder (5) mit zur axialen Richtung unter einem Winkel (β) von bis zu 60°, insbesondere von 10° bis 45°, besonders bevorzugt von 15° bis 35°, verlaufenden Erstreckungslinien (l₁) vorgesehen sind.

9. Fahrzeugluftreifen nach einem der Ansprüche 1 bis 8, **dadurch gekennzeichnet, dass** Einschnittfelder (5) die Profilpositive durchqueren.

10. Fahrzeugluftreifen nach einem der Ansprüche 1 bis 4, 7 oder 8, **dadurch gekennzeichnet, dass** Einschnittfelder (5) vor Randkanten des jeweiligen Profilpositives in einem Abstand von mindestens 5,0 mm enden.

11. Fahrzeugluftreifen nach einem der Ansprüche 1 bis 10, **dadurch gekennzeichnet, dass** die Breite (b₁) des Einschnittfeldes (5) bzw. der Einschnittfelder (5) über den Verlauf der Erstreckungslinie (l₁) konstant ist oder insbesondere kontinuierlich abnimmt.

12. Fahrzeugluftreifen nach einem der Ansprüche 1 bis 11, **dadurch gekennzeichnet, dass** der Laufstreifen zueinander benachbart verlaufende Profipositive umfasst, wie Profilrippen oder Profilblockreihen (2, 3), welche durch eine Umfangsrille (4) voneinander getrennt sind, wobei die in dem einen Profilpositiv ausgebildeten Einschnittfelder (5) gegenüber den im benachbarten Profilpositiv ausgebildeten Einschnittfeldern (5) - jeweils bezogen auf die Erstreckungslinien (l₁) der Einschnittfelder (5) - in Umfangsrichtung gegeneinander versetzt sind.

13. Fahrzeugluftreifen nach einem der Ansprüche 1 bis 12, **dadurch gekennzeichnet, dass** der Laufstreifen zumindest eine Profilblockreihe mit in Umfangsrichtung aufeinanderfolgenden Profilblöcken umfasst, wobei auf jedem Profilblock oder auf jedem zweiten Profilblock jeweils ein Einschnittfeld (5) ausgebildet ist.

## Claims

1. Pneumatic vehicle tyre having a profiled tread with profile positives, for example profile ribs (1, 2, 3) or profile blocks, which are provided on their outer surface with a sipe hatching comprising one or more strip-shaped sipe field(s) (5) and having regions free from sipe fields (5), wherein each sipe field (5) has on the outer surface of the associated profile positive a frame-like field delimitation (5') and is formed by a multiplicity of sipes (5a, 5b) and webs (6) running straight and, at least in groups (G1, G2), parallel to one another and following alternately one after the other, wherein the sipes (5a, 5b) and the webs (6) have in each case a width of 0.4 mm to 1.5 mm and the sipes (5a, 5b) have a depth of 1.0 mm to 3.0 mm,
**characterized**
**in that** each sipe field (5) is made up of at least two adjacently formed groups (G1, G2) of sipes (5a, 5b) respectively running parallel to one another, wherein the sipes (5a) belonging to one group (G1) run at an angle (α) in relation to the sipes (5b) in the other group or groups (G2),
wherein sipes (5a, 5b) of at least two groups (G1, G2) run in a V-shaped manner in relation to one another in plan view and the tips of the Vs lie on a single curved- or straight-running line of extent (l₁) and
wherein the sipe field or fields (5) has or have - determined perpendicularly to the line of extent (l₁) - over at least 75% of the length of the line of extent (l₁) a width (b₁) of 5.0 mm to 15.0 mm.

2. Pneumatic vehicle tyre according to Claim 1, **characterized in that** sipes (5a, 5b), which run in a V-shaped manner in relation to one another, enclose with one another an angle (α) of 60° to 120°, in particular of 80° to 115°, particularly preferably of 100° to 110°.

3. Pneumatic vehicle tyre according to Claim 1 or 2, **characterized in that** at each tip of a V two sipes (5a, 5b) or two webs (6) meet one another.

4. Pneumatic vehicle tyre according to Claim 1 or 2, **characterized in that** at each tip of a V a sipe (5a, 5b) and a web (6) meet one another.

5. Pneumatic vehicle tyre according to one of Claims 1 to 4, **characterized in that** at least one sipe field (5) is provided with a line of extent (l₁) running in the circumferential direction.

6. Pneumatic vehicle tyre according to one of Claims 1 to 5, **characterized in that** the profile positives of the tread have at least one associated circumferentially running profile (2), on which at least one circumferentially running sipe field (5) with a line of extent (l₁) aligned in the circumferential direction is formed.

7. Pneumatic vehicle tyre according to one of Claims 1 to 6, **characterized in that** sipe fields (5) with lines of extent (l₁) running in the axial direction are provided.

8. Pneumatic vehicle tyre according to one of Claims 1 to 6, **characterized in that** sipe fields (5) with lines of extent (l₁) running in relation to the axial direction at an angle (β) of up to 60°, in particular of 10° to 45°, particularly preferably of 15° to 35°, are provided.

9. Pneumatic vehicle tyre according to one of Claims 1 to 8, **characterized in that** sipe fields (5) cross through the profile positives.

10. Pneumatic vehicle tyre according to one of Claims 1 to 4, 7 or 8, **characterized in that** sipe fields (5) end before peripheral edges of the respective profile positive at a distance of at least 5.0 mm.

11. Pneumatic vehicle tyre according to one of Claims 1 to 10, **characterized in that** the width (b₁) of the sipe field (5) or the sipe fields (5) is constant, or in particular decreases continuously, over the course of the line of extent (l₁).

12. Pneumatic vehicle tyre according to one of Claims 1 to 11, **characterized in that** the tread comprises adjacently running profile positives, such as profile ribs or rows of profile blocks (2, 3), which are separated from one another by a circumferential groove (4), wherein the sipe fields (5) formed in the one profile positive are offset with respect to the sipe fields (5) formed in the adjacent profile positive - in each case with respect to the lines of extent (l₁) of the sipe fields (5) - from one another in the circumferential direction.

13. Pneumatic vehicle tyre according to one of Claims 1 to 12, **characterized in that** the tread comprises at least one row of profile blocks with profile blocks following one another in the circumferential direction, wherein a sipe field (5) is respectively formed on every profile block or on every second profile block.

## Revendications

1. Pneumatique de véhicule comprenant une bande de roulement profilée munie d'éléments positifs de profil, par exemple de nervures de profil (1, 2, 3) ou de blocs de profil, qui sont pourvus sur leur surface extérieure d'une hachure d'incisions constituée d'un ou de plusieurs champs d'incisions (5) en forme de bande et présentent des zones exemptes de champs d'incisions (5), chaque champ d'incisions (5) présentant sur la surface extérieure de l'élément positif de profil correspondant une limitation de champ (5') de type cadre et étant formé par une pluralité d'incisions (5a, 5b) et d'entretoises (6) droites et parallèles entre elles au moins en groupes (G1, G2), se succédant en alternance, les incisions (5a, 5b) et les entretoises (6) présentant chacune une largeur de 0,4 mm à 1,5 mm et les incisions (5a, 5b) présentant une profondeur de 1,0 mm à 3,0 mm,
**caractérisé en ce que**
chaque champ d'incisions (5) se compose d'au moins deux groupes (G1, G2), configurés pour être adjacents l'un à l'autre, d'incisions (5a, 5b) s'étendant respectivement parallèlement les unes aux autres, les incisions (5a) appartenant à un groupe (G1) s'étendant à un angle (α) par rapport aux incisions (5b) dans le ou les autres groupes (G2),
des incisions (5a, 5b) d'au moins deux groupes (G1, G2) s'étendant en forme de V les unes par rapport aux autres en vue de dessus et les pointes de V étant situées sur une ligne d'extension unique (l₁) incurvée ou droite et
le ou les champs d'incisions (5) présentant, tel que déterminé perpendiculairement à la ligne d'extension (l₁), une largeur (b₁) de 5,0 mm à 15,0 mm sur au moins 75 % de la longueur de la ligne d'extension (l₁).

2. Pneumatique de véhicule selon la revendication 1, **caractérisé en ce que** les incisions (5a, 5b), qui s'étendent en forme de V les unes par rapport aux autres, forment entre elles un angle (α) de 60° à 120°, notamment de 80° à 115°, de manière particulièrement préférée de 100° à 110°.

3. Pneumatique de véhicule selon la revendication 1 ou 2, **caractérisé en ce que** deux incisions (5a, 5b) ou deux entretoises (6) se rencontrent à chaque pointe de V.

4. Pneumatique de véhicule selon la revendication 1 ou 2, **caractérisé en ce qu'**une incision (5a, 5b) et une entretoise (6) se rencontrent à chaque pointe de V.

5. Pneumatique de véhicule selon l'une quelconque des revendications 1 à 4, **caractérisé en ce qu'**au moins un champ d'incisions (5) ayant une ligne d'extension (l₁) s'étendant dans la direction circonférentielle est prévu.

6. Pneumatique de véhicule selon l'une quelconque des revendications 1 à 5, **caractérisé en ce qu'**au moins une nervure de profil (2) s'étendant dans la direction circonférentielle, sur laquelle est formé au moins un champ d'incisions (5) s'étendant dans la direction circonférentielle ayant une ligne d'extension (l₁) orientée dans la direction circonférentielle, fait partie des éléments positifs de profil de la bande de roulement.

7. Pneumatique de véhicule selon l'une quelconque des revendications 1 à 6, **caractérisé en ce que** des champs d'incision (5) ayant des lignes d'extension (l₁) s'étendant dans la direction axiale sont prévus.

8. Pneumatique de véhicule selon l'une quelconque des revendications 1 à 6, **caractérisé en ce que** des champs d'incisions (5) ayant des lignes d'extension (l₁) s'étendant par rapport à la direction axiale selon un angle (β) de jusqu'à 60°, notamment de 10° à 45°, de manière particulièrement préférée de 15° à 35°, sont prévus.

9. Pneumatique de véhicule selon l'une quelconque des revendications 1 à 8, **caractérisé en ce que** des champs d'incisions (5) traversent les éléments positifs de profil.

10. Pneumatique de véhicule selon l'une quelconque des revendications 1 à 4, 7 ou 8, **caractérisé en ce que** des champs d'incisions (5) se terminent à une distance d'au moins 5,0 mm avant des arêtes de bord de l'élément positif de profil respectif.

11. Pneumatique de véhicule selon l'une quelconque des revendications 1 à 10, **caractérisé en ce que** la largeur (b₁) du champ d'incisions (5) ou des champs d'incisions (5) est constante sur l'étendue de la ligne d'extension (l₁) ou diminue notamment de manière continue.

12. Pneumatique de véhicule selon l'une quelconque des revendications 1 à 11, **caractérisé en ce que** la bande de roulement comprend des éléments positifs de profil s'étendant au voisinage les uns des autres, tels que des nervures de profil ou des rangées de blocs de profil (2, 3), qui sont séparés les uns des autres par une rainure circonférentielle (4), les champs d'incisions (5) formés dans un élément positif de profil étant décalés les uns des autres dans la direction circonférentielle par rapport aux champs d'incisions (5) formés dans l'élément positif de profil voisin, respectivement par rapport aux lignes d'extension (l₁) des champs d'incisions (5) .

13. Pneumatique de véhicule selon l'une quelconque des revendications 1 à 12, **caractérisé en ce que** la bande de roulement comprend au moins une rangée de blocs de profil comprenant des blocs de profil se succédant dans la direction circonférentielle, un champ d'incisions (5) étant formé sur chaque bloc de profil ou sur chaque deuxième bloc de profil.
